# EUROPÄISCHE PATENTSCHRIFT

(11) **EP 2 708 483 B1**
(45) Veröffentlichungstag und Bekanntmachung des Hinweises auf die Patenterteilung: **23.09.2015**
(21) Anmeldenummer: 12401188.3
(22) Anmeldetag: 17.09.2012
(51) Int. Cl.: B65H 7/04, B65H 7/12, G01B 11/06

(54) **Verfahren und Vorrichtung zum Erkennen von Doppelteilen**
Device and method for detecting double parts
Procédé et dispositif destinés à détecter des pièces en double

(43) Veröffentlichungstag der Anmeldung: 19.03.2014
(73) Patentinhaber: Roland Electronic GmbH, 75210 Keltern-Ellmendingen (DE)
(72) Erfinder: Manz, Joachim, 76297 Stutensee (DE); Armingeon, Matthias, 75210 Keltern (DE); Walch, Friedbert, 75196 Remchingen (DE)
(74) Vertreter: Klocke, Peter

(56) Entgegenhaltungen:
- EP-A1- 1 510 484
- DE-A1- 3 901 088
- US-A- 5 841 540

## Beschreibung

Die vorliegende Erfindung betrifft ein Verfahren zum Erkennen von Doppelteilen beim Transport und bei der Beschickung von Maschinen mittels zwei gegenüber angeordneten Lasersensoren mit jeweils einer Laserquelle und einem Detektor zwischen denen die Teile hindurch laufen, wobei die Abstände zwischen dem jeweiligen Lasersensor und der diesem zugewandten Oberfläche des Teils gemessen werden und die Dicke des Teils aus der Differenz zwischen dem Abstand der Lasersensoren voneinander und der Summe der von den beiden Lasersensoren gemessenen Abstände ermittelt wird. Die Erfindung betrifft außerdem eine Vorrichtung zum Erkennen von Doppelteilen beim Transport und bei der Bestückung von Maschinen mit zwei gegenüber angeordneten Lasersensoreinheiten, die mit Abstand zueinander angeordnet, einen Messspalt für die dazwischen hindurch bewegten Teile bilden und mit jeweils einem Lasersensor mit jeweils einer Laserquelle und einem Detektor versehen sind sowie einer mit den Lasersensoreinheiten verbundenen oder verbindbaren elektronischen Steuereinheit.

Aus der DE 39 01 088 A1 ist ein derartiges Verfahren und eine derartige Vorrichtung zum Erkennen von Doppelteilen bekannt. Dieses Verfahren ermöglicht die Abtastung von durchlaufenden Teilen unabhängig von dem Material und der Oberflächenbeschaffenheit der Teile. Es können Blechtafeln, Blechplatten, Rollen, Blechzuschnitte, Frontplatinen usw. überwacht werden, die aus ferromagnetischem oder nicht ferromagnetischem Material bestehen, z. B. aus Stahl, Aluminium, Messing, Zink, Kupfer und sonstigen Metalllegierungen. Ebenso können auch Teile aus Kunststoff, Pappe und dergleichen überwacht werden.

Im Wesentlichen geht es darum, dabei festzustellen, dass tatsächlich nur ein Teil der Maschine zugeführt wird. Insbesondere für die Doppelblecherkennung beim Zuführen von Blechtafeln in Umformpressen haben sich verschiedene Verfahren etabliert. Dabei ist die Prozesssicherheit ein Merkmal, dem allergrößte Bedeutung beigemessen wird. Nicht jedes Messprinzip ist daher für diese anspruchsvolle Aufgabe geeignet. Ein Vorteil bei der Verwendung von Lasersensoren liegt darin, dass ein relativ kleiner Messweg gegenüber dem ebenfalls berührungslosen Wirbelstromverfahren bei der Überprüfung von Blechtafeln benötigt wird.

Bei den heutigen Laseranwendungen werden zum Zwecke der Dickenmessungen zwei Lasersensoren so eingebaut, dass diese sich gegenüberstehen und die Abstände wie vorstehend angegeben ermittelt werden. Diese Art der Montage und Auswertung ist in der Praxis nur zielführend, wenn dafür gesorgt wird, dass die beiden Laser zueinander exakt ausgerichtet sind, die Messachse rechtwinklig zur Oberfläche verläuft, ein synchrones Messen und Auswerten der Abstände erfolgt, die Montagedistanz konstant gehalten wird, schnelle Lasersensoren verwendet werden, die sich rasch auf geänderte Reflexionseigenschaften einstellen können, und wenn das Messsystem lückenlos überwacht wird.

Eine exakte Ausrichtung der beiden Laser zueinander ist absolut notwendig, denn nur dann kann hinreichend genau gemessen werden, da selbst bei senkrechter Ausrichtung der Laser zu dem zu messenden Teil bei nicht genauer Ausrichtung zueinander, d. h. mit Versatz, eine Unebenheit im Material, die bei dem einen Sensor vorliegt und beim anderen nicht, bereits zu Messfehlern führt. Wenn die Messachse nicht senkrecht zur Materialoberfläche ausgerichtet ist, wird nicht die Dicke sondern eine Strecke gemessen, die der tatsächlichen Dicke, geteilt durch den Kosinus des Winkels um den die Materialoberfläche vom rechten Winkel abweicht, entspricht. Zeitliche Messfehler können entstehen, wenn die beiden Abstände nicht zeitgleich gemessen werden und die Auswertung der beiden Abstände nicht paarweise erfolgt, wobei unter zeitgleichem Messen hier das synchrone Abtasten der Abstände gemeint ist. Diese Messfehler treten nur zum Vorschein, wenn das Material vibriert oder wellig ist. Abstände werden dann fehlerhaft gemessen, wobei das System lange Zeit ohne nennenswerte Messfehler arbeiten und dann urplötzlich auffällig werden kann, weil das Material zu diesem Zeitpunkt zu mehr Vibrationen neigt als zuvor.

Es ist somit wichtig, eine lückenlose Erkennung einer Störung vorzusehen, um fehlerhafte Auswertungen zu vermeiden. Bekannte Lasersensoren zeigen hier eine intrinsische Schwäche, die sich erst beim Ausfall des Laserstrahls zeigt. Dies kann dazu führen, dass das Material unbemerkt durch den Messspalt gefahren werden kann. Dies ist besonders schwerwiegend, denn dann ist die Doppelblechkontrolle praktisch nicht mehr prozesssicher.

Der vorliegenden Erfindung liegt daher die Aufgabe zu Grunde, eine Möglichkeit vorzuschlagen, mit der die Prozesssicherheit bei der Erkennung von Doppelteilen erhöht wird.

Diese Aufgabe wird erfindungsgemäß durch ein Verfahren und eine Vorrichtung mit den Merkmalen des Verfahrensanspruchs bzw. des nebengeordneten Vorrichtungsanspruchs gelöst. Weitere vorteilhafte Ausgestaltungen sind den jeweiligen rückbezogenen Unteransprüchen zu entnehmen.

Gemäß der Erfindung wird mittels eines einer der beiden Laserquellen gegenüber angeordneten Fotoempfängers der jeweilige Laserstrahl detektiert und damit der Erkennungsvorgang durch die Lasersensoren überwacht. Dies führt dazu, dass die Prozesssicherheit in der Überprüfung von Doppelteilen wesentlich verbessert wird. Mit dieser Maßnahme wird erreicht, dass Spekulationen über den Aufenthaltsort des Materials vermieden werden und mögliche Fehlstellungen der Laserquellen bzw. Lasersensoren erkannt werden.

Vorzugsweise wird mittels des Fotoempfängers festgestellt, ob sich ein Teil zwischen den Lasersensoren befindet. Diese zusätzliche Maßnahme zu den von den Lasersensoren vorliegenden Messdaten ist insbesondere von Bedeutung, um eindeutig den Zustand "kein Material" zwischen den Lasersensoren zu erkennen.

Vorteilhafterweise wird dann, wenn kein Teil sich zwischen den Lasersensoren befindet die Ausrichtung der beiden Lasersensoren zueinander überprüft, indem der Fotoempfänger nur dann ein Signal von der gegenüber angeordneten Laserquelle empfängt, wenn die beiden Laserquellen bzw. Lasersensoren exakt ausgerichtet sind.

Diese beiden vorstehend genannten Maßnahmen führen dazu, dass gemäß einer weiteren Ausbildung des Verfahrens eine Messung von Teilen nur durchgeführt wird, wenn vor der Messung der Abstände durch die Lasersensoren von dem Fotoempfänger der Laserstrahl von der einen ihm gegenüber angeordneten Laserquelle empfangen wird. Zusätzlich kann gemäß einer Weiterbildung die Messung auch dann nur durchgeführt werden, wenn von beiden Lasersensoren ein Messsignal bezüglich des Abstandes zu einem Teil abgegeben wird. Damit ist zumindest eine genauere Aussage über die Prozesskontrolle möglich als früher als ein ungültiger Abstandswert als "kein Material im Messspalt" interpretiert wurde.

Des Weiteren kann nach einer vorteilhaften Ausbildung des Verfahrens nach einer Messung der Abstände durch die Lasersensoren eine Störungsmeldung ausgegeben werden, wenn von dem Fotoempfänger kein Laserstrahl von der einen gegenüberliegenden Laserquelle empfangen wird. Dies würde bedeuten, dass sich während der Messung die Ausrichtung der Lasersensoren verändert hat und daher die vorgegangene Messung zum Teil zumindest fragwürdig ist.

In einer weiteren Ausbildung des Verfahrens kann vorteilhafterweise die andere Laserquelle kurzzeitig ausgeschaltet werden, wenn der Fotoempfänger von der dem Fotoempfänger gegenüberliegenden Laserquelle einen Laserstrahl empfängt. Dies soll verhindern, dass mögliches Streulicht von der anderen Laserquelle auf dem Fotoempfänger landet und von diesem als ein Signal von der gegenüberliegenden Laserquelle interpretiert wird.

Zweckmäßigerweise ist das Verfahren so ausgestaltet, dass die Messung der Abstände bei den Teilen gestartet wird, wenn ein Teil in dem von dem Fotoempfänger detektierten Laserstrahl bewegt wird, d.h. der Fotoempfänger empfängt kein Licht von der gegenüber angeordneten Laserquelle. Damit ist eine eindeutiger Messbeginn festgelegt.

Die erfindungsgemäße Vorrichtung weist einen Fotoempfänger auf, der bei freiem Messspalt und für eine exakte Messung aufeinander ausgerichteten Lasersensoreinheiten von der Laserquelle einer gegenüber angeordneten Lasersensoreinheit den Laserstrahl empfängt.

Vorzugsweise wird durch den durch die Lasersensoreinheiten definierten Messspalt ein für die Messung gültiger Messbereich festgelegt, der für die Auswertung zweckmäßig ist.

Vorteilhafterweise gibt die Steuereinheit eine Störungsmeldung aus, wenn der Fotoempfänger kein Signal von der gegenüber angeordneten Laserquelle empfängt und eine oder beide Lasersensoreinheiten kein Signal abgeben. In diesem Fall ist eindeutig Material zwischen den Lasersensoreinheiten, jedoch liefern die Lasersensoreinheiten nicht die demzufolge zu erwartenden Signale. Idealerweise könnte die Ausrichtung derart sein, dass die beiden Lasersensoreinheiten im Wesentlichen immer die gleichen Signale liefern müssen. Treten hier Abweichungen in einem gewissen Toleranzbereich auf, bedeutet das eine Welligkeit des Materials, außerhalb des Toleranzbereichs ein Fehler.

Grundsätzlich kann der Fotoempfänger mit in der Laserquelle integriert oder extern angeordnet sein. Vorteilhafterweise ist der Fotoempfänger derart angeordnet, dass das Streulicht von dem Auftreffen des Laserstrahls auf eine Glasabdeckung der ersten Laserquelle stammt. Hier wird durch eine einfache konstruktive Maßnahme die Anordnung des Fotoempfängers realisiert. Die üblicherweise bei der Laserquelle ohnehin vorhandene Glasplatte, durch die der Laserstrahl der Laserquelle austritt, wird dazu benutzt, die Reflektion des von der gegenüber angeordneten Laserquelle auf diese Glasplatte auftreffenden Laserstrahls einzufangen. Die Dimensionierung ist dabei in einem derart kleinen Bereich, dass beim Empfangen von Reflexionen durch den Fotoempfänger davon ausgegangen werden kann, dass die beiden Laserquellen exakt ausgerichtet sind.

Um zu verhindern, dass der Fotoempfänger Streulicht jeglicher Art empfängt, das zu Fehlinterpretationen fehlen kann, ist ein optisches Abschirmelement vorgesehen, das das Auftreten von Umgebungslicht auf den Fotoempfänger verhindert. Dies kann durch geeignete optische Elemente, wie beispielsweise Filter, realisiert sein. Auch ist es möglich, hierzu einfach eine innenseitig dunkle Hülse zu verwenden, in der der Fotoempfänger angeordnet ist und durch die der Laserstrahl auf die Glasplatte gelangt.

Die Erfindung ermöglicht somit eine prozesssicherere Kontrolle von Doppelteilen mittels einer zusätzlichen konstruktiven Maßnahme an bestehenden Einheiten und der entsprechenden Durchführung des Messverfahrens. Der Vorteil liegt darin, dass eindeutig bestimmbar ist, wenn kein Material sich im Messspalt befindet und die Ausrichtung der beiden Sensoren wird überprüft.

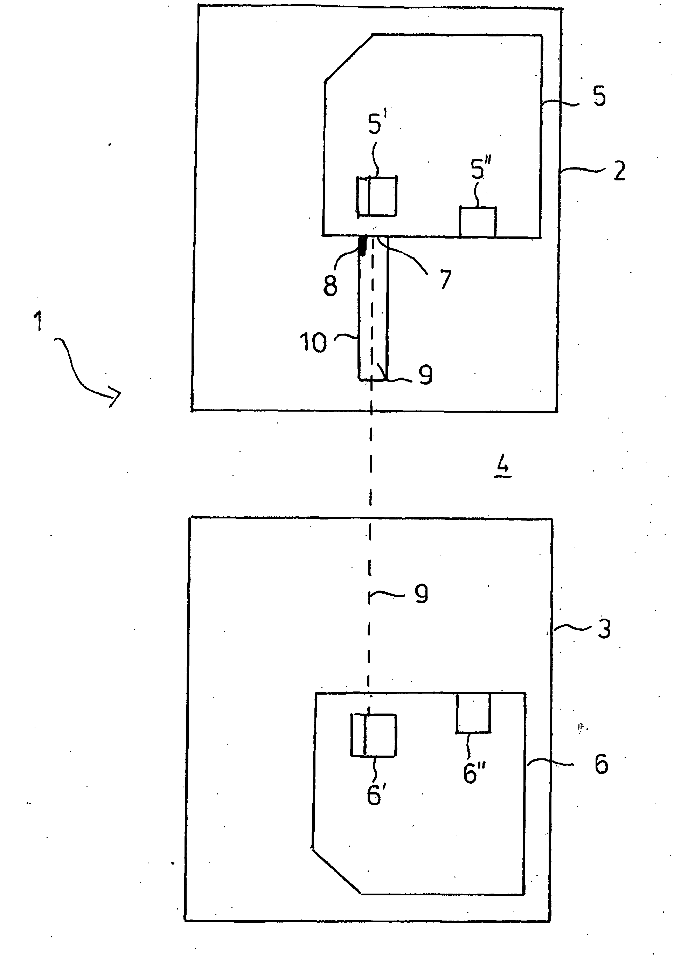

Weitere Merkmale der Erfindung ergeben sich aus der folgenden Beschreibung eines Ausführungsbeispiels der Erfindung in Verbindung mit den Ansprüchen und der Zeichnung. In der einzigen Figur ist in einer prinzipiellen Schnittdarstellung die Anordnung der Lasersensoreinheiten ohne Material zwischen Lasersensoreinheiten dargestellt. Die Figur zeigt eine Vorrichtung 1 mit einer ersten Lasersensoreinheit 2 und einer zweite Lasersensoreinheit 3. Zwischen den Lasersensoreinheiten 2, 3 wird der Messspalt 4 gebildet. Jede Lasersensoreinheit 2, 3 weist einen Lasersensor 5 bzw. 6 auf, die jeweils eine Laserquelle 5', 6' und einen Detektor 5", 6" in bekannter Art und Weise zur Abstandsmessung enthalten. Mittels einer nicht dargestellten Steuereinheit werden die von den Laserdetektoren gelieferten Signale ausgewertet. An dem Lasersensor 5 befindet sich eine Hülse 10 zur Fremdlichtabschattung, die an ihrem dem Austrittsfenster 7 des Lasersensors 5 nahen Ende einen Fotoempfänger 8 auf der Innenseite aufweist. Der Fotoempfänger 8 kann eine übliche Fotodiode sein. Diese detektiert das von einem Laserstrahl 9, der von der in dem Lasersensor 6 angeordneten Laserquelle 6' stammt, als Streulicht von dem Austrittsfenster 7 zurückreflektierte Licht. Das von der Fotodiode 8 gelieferte Signal wird ebenfalls der nicht dargestellten elektrischen Steuereinrichtung zur Auswertung zugeführt.

Sobald der Laserstrahl 9 der Laserquelle 6' von dem Fotoempfänger 8 erfasst wird, ist bestätigt, dass sich kein Material in dem Messspalt 4 befindet. Dieser Zustand ist damit eindeutig. Zur Sicherheit kann der zu Lasersensor 5 kurzfristig deaktiviert werden. Damit wird bei der Überprüfung sichergestellt, dass nicht versehentlich der Fotoempfänger 8 Licht des Laserstrahls aus dem Lasersensor 5 empfängt und damit der Messspalt 4 versehentlich als frei interpretiert wird.

Ein möglicher Verfahrensablauf ist derart, dass nach dem erkannt wurde, dass sich Material zwischen den Sensoreinheiten 2, 3 befindet, eine Messung durchgeführt und festgestellt wird, ob die über Lasersensoren 5, 6 gelieferten Signale gültig sind. Trifft das zu, wird die Messung fortgesetzt. Ergibt sich, dass sie beide ungültig sind, weil sie beispielsweise Grenzwerte über- oder unterschreiten, erfolgt ein kurzfristiges Ausschalten des Lasersensors 5. Sofern am Fotoempfänger 8 ein Signal anliegt, bedeutet dies, dass kein Material vorhanden ist, und es kann mit einer nächsten Messung begonnen werden. Liegt kein Signal vor, wird eine Störung ausgegeben. Genauso wird bei der Messung eine Störung ausgegeben, wenn ein Signal des Lasersensors 5 oder Lasersensors 6 ungültig ist.

## Patentansprüche

1. Verfahren zum Erkennen von Doppelteilen beim Transport und bei der Beschickung von Maschinen mittels zwei gegenüber angeordneter Lasersensoren (5, 6) mit jeweils einer Laserquelle (5', 6') und einem Detektor (5", 6"), zwischen denen die Teile hindurchlaufen, wobei die Abstände zwischen dem jeweiligen Lasersensor (5, 6) und der diesem zugewandten Oberfläche des Teils gemessen werden und die Dicke des Teils aus der Differenz zwischen dem Abstand der Lasersensoren (5, 6) und der Summe der von den beiden Lasersensoren (5, 6) gemessenen Abstände ermittelt wird, **dadurch gekennzeichnet, dass** mittels eines der beiden Laserquellen (5', 6') gegenüber angeordneten Fotoempfängers (8), der jeweilige Laserstrahl detektiert und damit der Erkennungsvorgang durch die Lasersensoren (5, 6) überwacht wird.

2. Verfahren nach Anspruch 1, **dadurch gekennzeichnet, dass** mittels des Fotoempfängers (8) festgestellt wird, ob sich kein Teil zwischen den Lasersensoren (5, 6) befindet.

3. Verfahren nach Anspruch 1 oder 2, **dadurch gekennzeichnet, dass** die Ausrichtung der beiden Lasersensoren (5, 6) zueinander überprüft wird, wenn kein Teil sich zwischen den Lasersensoren (5, 6) befindet.

4. Verfahren nach einem der vorangegangenen Ansprüche, **dadurch gekennzeichnet, dass** eine Messung von Teilen nur durchgeführt wird, wenn vor der Messung der Abstände durch die Lasersensoren (5, 6) von dem Fotoempfänger (8) der Laserstrahl (9) von der einen gegenüberliegenden Laserquelle (6') empfangen wird.

5. Verfahren nach Anspruch 4, **dadurch gekennzeichnet, dass** die Messung der Abstände durch die Lasersensoren (5, 6) nur durchgeführt wird, wenn von beiden Lasersensoren (5, 6) ein Messsignal bezüglich des Abstandes zu einem Teil abgegeben wird.

6. Verfahren nach Anspruch 4, **dadurch gekennzeichnet, dass** nach einer Messung eine Störungsmeldung ausgegeben wird, wenn von dem Fotoempfänger (8) kein Laserstrahl (9) von der einen gegenüberliegenden Laserquelle (6') empfangen wird.

7. Verfahren nach Anspruch 4, **dadurch gekennzeichnet, dass** die andere Laserquelle (5') kurzzeitig ausgeschaltet wird, wenn der Fotoempfänger (8) von gegenüberliegenden Laserquelle (6') einen Laserstrahl (9) detektiert.

8. Verfahren nach einem der Ansprüche 4 bis 7, **dadurch gekennzeichnet, dass** die Messung von Teilen gestartet wird, wenn ein Teil in den von dem Fotoempfänger (8) detektierten Laserstrahl (9) bewegt wird.

9. Vorrichtung (1) zum Erkennen von Doppelteilen beim Transport und bei der Beschickung von Maschinen mit zwei gegenüber angeordneten Lasersensoreinheiten (2, 3) die mit Abstand zueinander angeordnet einen Messspalt (4) für die dazwischen hindurchbewegten Teile bilden und mit jeweils einem Lasersensor (5, 6), die jeweils eine Laserquelle (5', 6') und einem Detektor (5", 6") versehen sind, sowie einer mit den Lasersensoren (5, 6) verbundenen oder verbindbaren elektronischen Steuereinheit, **gekennzeichnet durch** einen Fotoempfänger (8) in einer Lasersensoreinheit (2, 3), der bei freiem Messspalt (4) und für eine exakte Messung aufeinander ausgerichteten Lasersensoreinheiten (5, 6) von der Laserquelle (5', 6') der gegenüber angeordneten Lasersensoreinheit (2, 3) den Laserstrahl (9) empfängt.

10. Vorrichtung (1) nach Anspruch 9, **dadurch gekennzeichnet, dass** der Messspalt (4) einen für die Messung gültigen Messbereich festlegt.

11. Vorrichtung (1) nach Anspruch 9 oder 10, **dadurch gekennzeichnet, dass** die Steuereinheit eine Störungsmeldung ausgibt, wenn der Fotoempfänger (8) kein Signal von der gegenüber angeordneten Laserquelle (6') empfängt und eine oder beide Lasersensoreinheiten (2, 3) kein Signal abgeben.

12. Vorrichtung (1) nach einem der vorangegangenen Ansprüche 9 bis 11, **dadurch gekennzeichnet, dass** der Fotoempfänger (8) derart angeordnet ist, dass er das Streulicht von dem Laserstrahl (9) empfängt, das von dem Auftreffen des Laserstrahls (9) auf eine Glasabdeckung (7) der ersten Laserquelle (5') stammt.

13. Vorrichtung (1) nach einem der vorangegangenen Ansprüche 9 bis 12, **dadurch gekennzeichnet, dass** ein optisches Abschirmelement (10) vorgesehen ist, das das Auftreten von Umgebungslicht auf den Fotoempfänger (8) verhindert.

## Claims

1. A method for detecting double parts during transport and during the loading of machines by means of two laser sensors situated opposite each other (5, 6), each having a laser source (5', 6') and a detector (5", 6"), between which the parts pass, wherein the distances between the respective laser sensor (5, 6) and the surface of the part facing it are measured and the thickness of the part is ascertained from the difference between the distance of the laser sensors (5, 6) from each other and the sum of the distances measured by the two laser sensors (5, 6), **characterized in that** the respective laser beam is detected by means of a photo receiver (8) situated opposite one of the two laser sources (5', 6'), and thus the detection process is monitored by the laser sensors (5, 6).

2. The method according to Claim 1, **characterized in that** it is determined by means of the photo receiver (8) whether there is no part located between the laser sensors (5, 6).

3. The method according to Claim 1 or 2, **characterized in that** the alignment of the two laser sensors (5, 6) relative to each other is checked if there is no part between the laser sensors (5, 6).

4. The method according to any one of the preceding claims, **characterized in that** a measurement of parts is only performed if the laser beam (9) from the one laser source (6') located opposite it is received by the photo receiver (8) prior to the measurement of the distances by the laser sensors (5, 6).

5. The method according to Claim 4, **characterized in that** the measurement of the distances by the laser sensors (5, 6) is only performed if a measurement signal referring to the distance from a part is outputted by both laser sensors (5, 6).

6. The method according to Claim 4, **characterized in that** a fault indication is issued after a measurement, if no laser beam (9) from the one laser source (6') located opposite is received by the photo receiver (8).

7. The method according to Claim 4, **characterized in that** the other laser source (5') is switched off briefly when the photo receiver (8) detects a laser beam (9) from the laser source (6') located opposite.

8. The method according to one of Claims 4 through 7, **characterized in that** that the measurement of parts is started when a part is moved into the laser beam (9) detected by the photo receiver (8).

9. A device (1) for detecting double parts during transport and during the loading of machines, having two laser sensor units (2, 3) situated opposite each other which, situated at a distance from each other, form a measuring gap (4) for the parts that are moved through between them, and each having a laser sensor (5, 6), each provided with a laser source (5', 6') and a detector (5", 6"), as well as an electronic control unit connected to or connectable to the laser sensors (5, 6), **characterized by** a photo receiver (8) in one laser sensor unit (2, 3), which receives the laser beam (9) from the laser sensor unit (5, 6) situated opposite, when the measuring gap (4) is free and the laser sensor units (2, 3) are aligned with each other for an exact measurement.

10. The device (1) according to Claim 9, **characterized in that** the measuring gap (4) establishes a valid measurement area for the measurement.

11. The device (1) according to Claim 9 or 10, **characterized in that** the control unit outputs a fault indication if the photo receiver (8) receives no signal from the laser source (6') situated opposite and one or both laser sensor units (2, 3) output no signal.

12. The device (1) according to any one of the preceding Claims 9 through 11, **characterized in that** the photo receiver (8) is situated so that it receives the scattered light from the laser beam (9), which comes from the laser beam (9) striking a glass covering (7) of the first laser source (5').

13. The device (1) according to any one of the preceding Claims 9 through 12, **characterized in that** an optical shielding element (10) is provided which prevents ambient light from striking the photo receiver (8).

## Revendications

1. Procédé de repérage de pièces en double au cours du transport et lors de l'alimentation de machines, au moyen de deux capteurs laser (5, 6) placés en regard l'un de l'autre, respectivement munis d'une source laser (5', 6') et d'un détecteur (5", 6"), et entre lesquels lesdites pièces défilent, sachant qu'il s'opère une mesure des distances entre le capteur laser (5, 6) considéré et la surface de la pièce qui est tournée vers ce dernier, et une détermination de l'épaisseur de ladite pièce sur la base de la différence entre l'espacement des capteurs laser (5, 6) et la somme des distances mesurées par les deux capteurs laser (5, 6), **caractérisé par le fait que** le rayonnement laser considéré est détecté au moyen d'un photorécepteur (8) placé en vis-à-vis des deux sources laser (5', 6'), le processus de repérage étant ainsi surveillé par l'intermédiaire des capteurs laser (5, 6).

2. Procédé selon la revendication 1, **caractérisé par le fait que** l'absence éventuelle d'une pièce, entre les capteurs laser (5, 6), est constatée au moyen du photorécepteur (8).

3. Procédé selon la revendication 1 ou 2, **caractérisé par le fait que** l'orientation mutuelle des deux capteurs laser (5, 6) est vérifiée lorsqu'aucune pièce ne se trouve entre lesdits capteurs laser (5, 6).

4. Procédé selon l'une des revendications précédentes, **caractérisé par le fait qu'**une mesure de pièces est effectuée uniquement lorsque, préalablement à la mesure des distances par les capteurs laser (5, 6), le rayonnement laser (9) émanant de l'une (6') des sources laser opposées est reçu par le photorécepteur (8).

5. Procédé selon la revendication 4, **caractérisé par le fait que** la mesure des distances, par les capteurs laser (5, 6), est effectuée uniquement lorsque les deux capteurs laser (5, 6) émettent un signal de mesure relatif à la distance par rapport à une pièce.

6. Procédé selon la revendication 4, **caractérisé par le fait qu'**un message de perturbation est délivré, à l'issue d'une mesure, lorsque le photorécepteur (8) ne reçoit aucun rayonnement laser (9) émanant de l'une (6') des sources laser opposées.

7. Procédé selon la revendication 4, **caractérisé par le fait que** l'autre source laser (5') est brièvement déconnectée lorsque le photorécepteur (8) détecte un rayonnement laser (9) émanant de la source laser (6') opposée.

8. Procédé selon l'une des revendications 4 à 7, **caractérisé par le fait que** la mesure de pièces est amorcée lorsqu'une pièce est mue jusque dans le rayonnement laser (9) détecté par le photorécepteur (8).

9. Dispositif (1) dévolu au repérage de pièces en double au cours du transport et lors de l'alimentation de machines, équipé de deux unités (2, 3) à capteurs laser, placées en regard l'une de l'autre et réservant, à distance l'une de l'autre, un interstice de mesure (4) affecté aux pièces mues entre lesdites unités, et d'un capteur laser (5, 6) respectif comprenant, à chaque fois, une source laser (5', 6') et un détecteur (5", 6"), ainsi que d'une unité de commande électronique raccordée, ou pouvant être raccordée aux capteurs laser (5, 6), **caractérisé par** la présence, dans une unité (2, 3) à capteur laser, d'un photorécepteur (8) qui reçoit le rayonnement laser (9) émanant de la source laser (5', 6') de l'unité (2, 3) à capteur laser placée en vis-à-vis, lorsque l'interstice de mesure (4) est dégagé, en vue d'une mesure précise d'unités (2, 3) à capteurs laser orientées l'une vers l'autre.

10. Dispositif (1) selon la revendication 9, **caractérisé par le fait que** l'interstice de mesure (4) établit fermement une plage de mesure valable pour la mesure.

11. Dispositif (1) selon la revendication 9 ou 10, **caractérisé par le fait que** l'unité de commande délivre un message de perturbation lorsque le photorécepteur (8) ne reçoit aucun signal provenant de la source laser (6') placée en vis-à-vis et lorsque l'une des unités (2, 3) à capteurs laser, ou les deux, n'émet(tent) aucun signal.

12. Dispositif (1) selon l'une des revendications 9 à 11 précédentes, **caractérisé par le fait que** le photorécepteur (8) est agencé de telle sorte qu'il reçoive la lumière diffusée qui émane du rayonnement laser (9) et est engendrée par l'incidence dudit rayonnement laser (9) sur un capot en verre (7) coiffant la première source laser (5').

13. Dispositif (1) selon l'une des revendications 9 à 12 précédentes, **caractérisé par le fait qu'**il est prévu un élément (10) de blindage optique, empêchant l'apparition de lumière ambiante sur le photorécepteur (8).
